# EUROPÄISCHE PATENTSCHRIFT

(11) **EP 1 003 261 B1**
(45) Veröffentlichungstag und Bekanntmachung des Hinweises auf die Patenterteilung: **05.11.2008**
(21) Anmeldenummer: 99116566.3
(22) Anmeldetag: 24.08.1999
(51) Int. Cl.: H02G 15/013, H02G 3/08

(54) **Dichtungseinlage für Kabelgarnituren**
Sealing insert for cable fittings
Joint d'étanchéité pour garnitures de câbles

(30) Priorität: 18.11.1998 DE 19853204
(43) Veröffentlichungstag der Anmeldung: 24.05.2000
(73) Patentinhaber: CCS Technology, Inc., Wilmington, DE 19803 (US)
(72) Erfinder: Fröhlich, Franz-Friedrich, 58091 Hagen (DE); Zimmer, Rainer, 58579 Schalksmühle (DE)
(74) Vertreter: Sturm, Christoph

(56) Entgegenhaltungen:
- DE-A- 2 525 339
- DE-A- 3 216 057
- GB-A- 2 143 596

## Beschreibung

Die Erfindung betrifft eine Dichtungseinlage mit rechteckförmiger Querschnittsform aus elastischem Kunststoffmaterial für Abdichtungen zwischen einem Dichtungskörper und einem Kabelmuffenkörper.

Aus EP 0 652 619 - B1 ist eine Haubenmuffe bekannt, bei der das Dichtungssystem umlaufend am Dichtungskörper angeordnet ist, wobei dieses Dichtungssystem aus einer im Volumen verringerbaren Dichtungsnut und einem in dieser Dichtungsnut eingelegten Dichtungsring besteht. Dadurch daß die Dichtungsnut im Volumen durch Krafteinwirkung auf eine bewegliche Nutwandung verringert wird, erfolgt die Anpressung des eingelegten Dichtungsringes um 90° versetzt zur Krafteinwirkung an die umgebende Muffenwandung. Die Dichtungseinlage besteht in diesem Fall durchgehend aus elastischem Material und wird dementsprechend verformt und dichtet dadurch umlaufend ab. Bei der Verformung des kompakten Dichtungsmaterials ist jedoch eine genaue Abstimmung nötig, um eindeutige Dichtungsverhältnisse zu erreichen.

Weiterhin sind Schlauchdichtungen mit rohrförmigem Querschnitt für die Abdichtung in Dichtungsnuten von Kabelgarnituren z.B. aus EP 0 443 118 - B1 bekannt, bei denen im Inneren ein Hohlraum verläuft, der dazu dient, daß die Dichtung"weicher" gestaltet werden kann. Dies führt jedoch unter Umständen dazu, daß diese Dichtungseinlagen beim Zusammenpressen ein Oval bilden und dazu neigen, zu kollabieren, das heißt in sich zusammenzufallen. Dadurch kann dann kein Druck gegen die Dichtflächen aufgebaut werden. Außerdem liegen derartige kreisförmige Schlauchdichtungen im wesentlichen nur in einem schmalen Bereich entlang einer Mantellinie der Dichtungseinlage bzw. einer Anlagelinie an den Dichtungsflächen an.

Eine Dichtungseinlage mit den Merkmalen des Oberbegriffes des Anspruchs 1 ist in DE-A-3 216 057 offenbart.

Der vorliegenden Erfindung liegt nun die Aufgabe zugrunde, eine Dichtungseinlage zu schaffen, die ausreichende Flexibilität zeigt und dabei trotzdem eine relativ gute Standfestigkeit aufweist, wobei sie in einem Dichtungssystem einsetzbar sein muß, bei dem die Umsetzung einer axial einwirkenden Schließkraft um 90° in eine radial auf die Dichtfläche wirkende Dichtungskraft erfolgt. Die gestellte Aufgabe wird gemäß der Erfindung mit einer Dichtungseinlage der eingangs erläuterten Art dadurch gelöst, daß mindestens eine rippenartige Ausformung jeweils zwischen zwei Eckbereichen der rechteckförmigen Querschnittsform entlang der Außenwandung der Dichtungseinlage verläuft, daß eine Hohlkammer längsverlaufend im Zentrum der Dichtungseinlage verläuft und daß Längskanäle in jedem Eckbereich der Dichtungseinlage parallel zur Hohlkammer verlaufend angeordnet sind.

Muffen und ähnliche Behälter aus Kunststoff haben einen hohen Ausdehnungskoeffizienten, der sich besonders im Temperaturwechsel stark bemerkbar macht. So werden an den Dichtungseinlagen solcher Behälter hohe Anforderungen bezüglich der Flexibilität und Anpassung bei Temperaturwechseln gestellt. Sie müssen deshalb sehr elastisch sein, um die Ausdehnungsschwankungen der beteiligten Komponenten auszugleichen und zu überbrücken. Sie müssen ein hohes Rückstellverhalten auch bei niedrigen Temperaturen zeigen und müssen auch unter ungünstigsten Verhältnissen immer noch ausreichende Dichtungskraft aufbringen. Bei bisherigen Kabelgarnituren aus Kunststoff werden z.B. auch elastische Dichtungen aus Gummi oder Silikon eingesetzt, die den Querschnitt eines Kreisringes oder einer Kreisscheibe haben. Dabei ist von Nachteil, daß diese Dichtungseinlagen mit kreisförmigem Ringprofil jeweils nur entlang einer Mantellinie der Dichtungseinlage an der zu dichtenden Fläche anliegen. Weiterhin haben solche Dichtungseinlagen den Nachteil, daß sie beim Zusammendrücken ein Oval bilden und dazu neigen, zu kollabieren, das heißt in sich zusammenzufallen. Dadurch wird gegen die Dichtflächen kein Druck mehr aufgebaut und die Dichtung wird schadhaft.

Die Dichtungseinlage gemäß der Erfindung mit rechteckförmigem Querschnitt, einem längsverlaufenden inneren Hohlraum und mit zusätzlichen Längskanälen parallel zum großen mittig verlaufenden Hohlraum genügt den gestellten Anforderungen und eignet sich im Zusammenhang mit längsverlaufenden rippenartigen Ausformungen besonders gut für die Abdichtung in Dichtungssystemen bei Kabelgarnituren aus Kunststoff. Außerdem eignet sich die Dichtungseinlage gemäß der Erfindung besonders gut für Anwendungsfälle bei denen die aufgebrachte Schließkraft auf die in einer Dichtungsnut eingesetzte Dichtungseinlage um 90° versetzt auf die anliegende Dichtungsfläche einwirkt wie es z.B. bei Haubenmuffen der Fall ist. Die Dichtungseinlage gemäß der Erfindung ist nahezu rechteckig, vorzugsweise quadratisch, so daß die Anlagefläche zur Dichtfläche wesentlich größer ist als bei einer Dichtung mit kreisförmigem Querschnitt. Die äußeren Andruckflächen der Dichtungseinlage sind jedoch mit rippenartigen, längsverlaufenden Ausformungen versehen. Diese rippenartigen Ausformungen vervielfachen die Andrucksfläche zur Dichtungsfläche gegenüber einem Kreisprofil und verhindern Quereinschlüsse, die gegebenenfalls zu Undichtigkeiten führen. Vorzugsweise ist der innen verlaufende Hohlraum von ovalem Querschnitt, wobei die Längsachse des Ovals in Richtung der einwirkenden Schließkraft verläuft. Auf diese Weise wird die einwirkende Schließkraft diagonal nach den Seiten abgelenkt und wirken gleichmäßiger auf die anliegende Dichtfläche. Außerdem sind in den Eckbereichen der Dichtungseinlage parallel zum inneren Hohlraum kleinere Längskanäle angeordnet, wodurch für ausreichenden Hub in den Eckbereichen der Dichtungseinlage gesorgt wird. Außerdem wird dadurch die Steifigkeit der Dichtungseinlage herabgesetzt. Dadurch können die erforderlichen Andruckkräfte bei gleicher Dichtungswirkung verringert werden.

In einer Weiterbildung der erfindungsgemäßen Dichtungseinlage werden jeweils Löcher in den längsverlaufenden Hohlraum und/oder die parallel dazu angeordneten Längskanäle eingebracht, so daß deren Innenräume mit der äußeren Umgebung in Verbindung stehen. Hiermit wird nun das Problem der unterschiedlichen Temperaturgänge im Außen- und Innenbereich der Dichtungseinlage gelöst. Durch den zeitlich unterschiedlichen Temperaturverlauf bei äußeren Temperaturschwankungen bis in die Innenbereiche der Dichtungseinlage ergeben sich unter Umständen bisher Spannungen zwischen den einzelnen Muffenteilen, die sich auf die Dichtungsverhältnisse schädlich auswirken können. So zieht sich zum Beispiel bei einer äußeren Abkühlung die äußere Muffenschale zusammen, während im Inneren der Dichtungseinlage die Temperatur noch höher liegt, so daß im Inneren der Dichtungseinlage im geschlossenen Zustand ein sehr hoher Druck entsteht, der zur Permeation von Luft nach außen führt. Bei einer späteren Erwärmung dehnt sich dann die Muffenschale wieder aus, während die Luft in der Dichtungseinlage noch kalt ist und außerdem durch die zuvor stattgefundene Permeation verringert ist. Es entsteht dadurch eine Undichtigkeit während des Temperaturwechsels, die schließlich zum Ausfall der Dichtung führen kann. Dieser Vorgang tritt besonders dann stark in Erscheinung, wenn für die Dichtungseinlage ein Schaummaterial verwendet wird, da dann die Permeation von Luft auch in den einzelnen Poren stattfindet. Durch das Einbringen von Löchern in die längsverlaufenden Hohlräume bzw. Längskanäle zur äußeren Umgebung findet ein entsprechender Luftausgleich statt, so daß die aufgeführten Mängel nicht eintreten können. Die erfindungsgemäße Dichtungseinlage wird nun anhand von drei Figuren näher erläutert.
- Figur 1: zeigt eine an sich bekannte Dichtungseinlage aus Vollmaterial mit rechteckigem Querschnitt, die bei Veränderung des Nutvolumens gegen die äußere Muffenwandung gepreßt wird.
- Figur 2: zeigt eine schlauchförmige Dichtungseinlage mit kreisförmigem Querschnitt.
- Figur 3: verdeutlicht die Ausführungsform der Dichtungseinlage gemäß der Erfindung in einem Dichtungssystem.

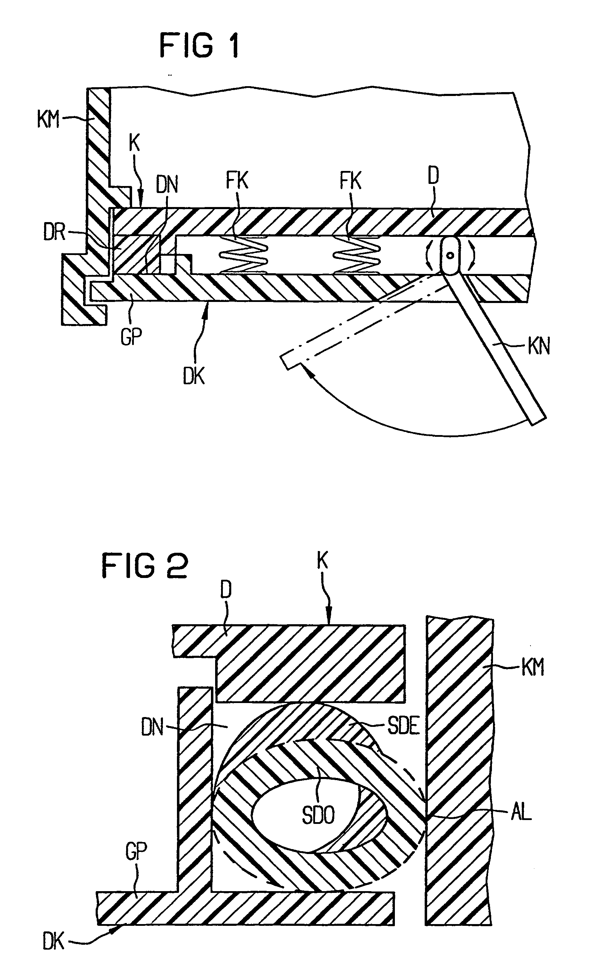

In Figur 1 ist ein Ausführungsbeispiel nach dem Stand der Technik dargestellt. Es handelt sich dabei um eine Kabelmuffe KM, die stirnseitig mit einem Dichtungskörper DK abgeschlossen ist. Dieser Dichtungskörper DK besteht aus einer Grundplatte GP und einer darüber liegenden, beweglich angeordneten Druckeinheit D. Am umlaufenden Rand des Dichtungskörpers DK ist eine umlaufende Dichtungsnut DN gebildet, wobei das Dichtungsnutvolumen durch die bewegliche Druckeinheit D veränderbar ist. Die Druckeinheit D wird mit Hilfe eines Knebels KN entgegen der Federkräfte FK beim Verschließen der Kabelmuffe KM auf den eingelegten Dichtungsring DR aus elastischem Vollmaterial bewegt, wobei die entsprechende Kraft K durch Verringerung des Dichtungsvolumens auf den Dichtungsring DR einwirkt. Der Dichtungsring DR wird dadurch um 90° zur einwirkenden Kraft K versetzt gegen die umgebende innere Muffenwandung der Kabelmuffe KM gepreßt, wodurch die Abdichtung erfolgt.

In Figur 2 ist ein Ausschnitt des in Figur 1 bereits beschriebenen Dichtungssystems mit der Grundplatte GP, der Druckeinheit D und der Dichtungsnut DN dargestellt, wobei hier eine bisher übliche schlauchförmige Dichtungseinlage SDE mit zunächst kreisförmigem Querschnitt verwendet ist. Im Dichtungsfall, das heißt wenn durch die einwirkende Kraft K das Dichtungsnutvolumen der Dichtungsnut DN verringert wird, verformt sich die eingelegte schlauchförmige Dichtungseinlage SDE in eine gestrichelt gezeichnete ovale Querschnittsform SDO, wobei sie entlang einer Anlagelinie AL an die innere Muffenwandung der Kabelmuffe AM angepreßt wird. Dieser Anpreßbereich ist jedoch sehr schmal und leicht anfällig gegen Störeinflüsse. Außerdem besteht die Gefahr, daß die oval verformte, schlauchförmige Dichtungseinlage SDO völlig kollabiert und somit völlig ausfällt, da kein Dichtungsdruck mehr aufgebaut werden kann.

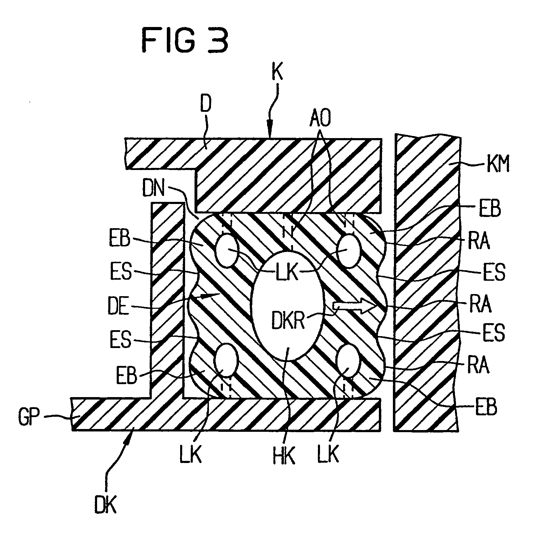

In Figur 3 hingegen wird als Ausführungsbeispiel der Erfindung eine Dichtungseinlage DE im Querschnitt skizziert, wobei z.B. das gleiche Dichtungssystem eingesetzt wird wie bei dem oben diskutierten Stand der Technik. Es wird also ebenfalls eine Dichtungsnut DN mit veränderbarem Dichtungsnutvolumen verwendet, wobei die Schließkraft K wieder über eine Druckeinheit D auf die Dichtungseinlage DE einwirkt. In der Dichtungsnut DN ist nun die Dichtungseinlage DE gemäß der Erfindung eingesetzt. Sie hat rechteckförmige Querschnittsform; in diesem Fall sogar quadratische Querschnittsform. Um die Anlage und damit die Dichtung zur inneren Kabelmuffenwandung der Kabelmuffe KM zu verbessern ist mindestens eine rippenartige Ausformung RA zwischen zwei Eckbereichen EB entlang einer Mantellinie der Dichtungseinlage DE angeordnet. Bei diesem Ausführungsbeispiel verlaufen auf zwei gegenüberliegenden Anliegeseiten der Dichtungseinlage DE jeweils drei rippenartige Ausformungen RA zwischen je zwei Eckbereichen EB. Zwischen den rippenartigen Ausformungen RA, die hier im Querschnitt gesehen zum Beispiel wellenförmig ausgeführt sind, bestehen längsverlaufende Einsenkungen ES, so daß die Dichtungseinlage DE entlang mehrerer Anlagelinien mit entsprechend ausgleichenden, dazwischenliegenden Einsenkungen ES an der Dichtungsfläche der Innenwandung der Kabelmuffe KM anliegt. Außerdem sind innerhalb der Dichtungseinlage DE längsverlaufend in der Mitte eine Hohlkammer HK und in den Eckbereichen EB jeweils Längskanäle LK angeordnet. Diese Hohlkammer HK bzw. die Längskanäle LK können kreisförmigen oder vorteilhafterweise - wie hier gezeichnet ist - ovalen Querschnitt aufweisen. Bei ovalen Querschnitten verläuft allerdings die lange Achse in Richtung der einwirkenden Schließkraft K, was zur Folge hat, daß die Neigung zum Kollabieren der Dichtungseinlage wesentlich geringer ist als bei kreisförmigen Querschnitten und daß außerdem eine gleichmäßigere Umlenkung und Druckverteilung in Richtung der wirksamen Dichtungskraft DKR auf die umgebende innere Kabelmuffenwandung der Kabelmuffe KM erfolgt. Es ist auch zweckmäßig, die längsverlaufenden Ecken der Dichtungseinlage abzurunden, um ein Umschlagen der Ecken zu verhindern.

Weiterhin ist in der Figur 3 angedeutet, daß die Längskanäle LK wie auch die längsverlaufende Hohlkammer HK mit Löchern bzw. Ausgleichsöffnungen AO versehen sind, über die ein entsprechender Druckausgleich erfolgen kann. Auf diese Weise werden die oben beschriebenen Probleme bezüglich der Permeation und des Temperaturverlaufs behoben. Dies ist besonders wichtig, wenn als Dichtungseinlage ein Endlosring verwendet wird.

## Patentansprüche

1. Dichtungseinlage mit rechteckförmiger Querschnittsform aus elastischem Kunststoffmaterial für Abdichtungen zwischen einem Dichtungskörper und einem Kabelmuffenkörper,
wobei
mindestens eine rippenartige Ausformung (RA) jeweils zwischen zwei Eckbereichen (EB) der rechteckförmigen Querschnittsform entlang der Außenwandung der Dichtungseinlage (DE) verläuft, daß eine Hohlkammer (HK) längsverlaufend im Zentrum der Dichtungseinlage (DE) verläuft **dadurch gekennzeichnet, daß** Längskanäle (LK) in jedem Eckbereich (EB) der Dichtungseinlage (DE) parallel zur Hohlkammer (HK) verlaufend angeordnet sind.

2. Dichtungseinlage nach Anspruch 1,
**dadurch gekennzeichnet,**
**daß** die rechteckige Querschnittsform ein Quadrat ist.

3. Dichtungseinlage nach einem der vorhergehenden Ansprüche,
**dadurch gekennzeichnet,**
**daß** die längsverlaufenden Ecken der Dichtungseinlage (DE) abgerundet sind.

4. Dichtungseinlage nach einem der vorhergehenden Ansprüche,
**dadurch gekennzeichnet,**
**daß** die Hohlkammer (HK) und/oder die Längskanäle (LK) kreisförmige Querschnitte aufweisen.

5. Dichtungseinlage nach einem der Ansprüche 1 bis 3,
**dadurch gekennzeichnet,**
**daß** die Hohlkammer (HK) und/oder die Längskanäle (LK) ovale Querschnitte aufweisen, wobei die langen Achsen der Ovale in Richtung der einwirkenden Schließkraft (K) verläuft.

6. Dichtungseinlage nach einem der vorhergehenden Ansprüche,
**dadurch gekennzeichnet,**
**daß** der Querschnitt der Hohlkammer (HK) größer ist als jeweils ein Querschnitt eines Längskanals (LK).

7. Dichtungseinlage nach einem der vorhergehenden Ansprüche,
**dadurch gekennzeichnet,**
**daß** mehrere rippenartige Ausformungen (RA), vorzugsweise jeweils zwei, in den seitlichen Außenwandungen der Dichtungseinlage (DE), vorzugsweise in zwei gegenüberliegenden Außenwandungen, angeordnet sind und daß zwischen den rippenartigen Ausformungen (RA) Einsenkungen (ES) gebildet sind, wobei vorzugsweise ein wellenförmiger Querschnitt gebildet ist.

8. Dichtungseinlage nach einem der vorhergehenden Ansprüche,
**dadurch gekennzeichnet,**
**daß** das elastische Material Gummi ist.

9. Dichtungseinlage nach einem der Ansprüche 1 bis 7,
**dadurch gekennzeichnet,**
**daß** das elastische Material Silikon ist.

10. Dichtungseinlage nach einem der vorhergehenden Ansprüche,
**dadurch gekennzeichnet,**
**daß** das elastische Material in geschäumter Weise vorliegt.

11. Dichtungseinlage nach einem der vorhergehenden Ansprüche,
**dadurch gekennzeichnet,**
**daß** die Dichtungseinlage (DE) als Endlosring ausgebildet ist.

12. Dichtungseinlage nach einem der vorhergehenden Ansprüche,
**dadurch gekennzeichnet,**
**daß** die Hohlkammer (HK) und/oder die Längskanäle (LK) jeweils ein Loch oder eine Ausgleichsöffnung (AO) nach auswärts aufweisen.

13. Dichtungseinlage nach einem der vorhergehenden Ansprüche,
**dadurch gekennzeichnet,**
**daß** sie in einer umlaufenden Dichtungsnut (DN) eines Dichtungskörpers (DK) für eine Kabelmuffe (KM) angeordnet ist und daß sie durch Verringerung des Dichtungsnutvolumens aufgrund axialer Schließkrafteinwirkung gegen die umgebende Innenwandung der Kabelmuffe (KM) radial anpreßbar ist.

## Claims

1. Sealing insert with a rectangular cross-sectional shape made from elastic plastic material for seals between a sealing body and a cable sleeve body, at least one rib-like protuberance (RA) running in each case between two corner regions (EB) of the rectangular cross-sectional shape along the outer wall of the sealing insert (DE), and a hollow chamber (HK) running in the centre of the sealing insert (DE) in such a way so as to run longitudinally, **characterized in that** longitudinal channels (LK) are arranged in each corner region (EB) of the sealing insert (DE) so as to run parallel to the hollow chamber (HK).

2. Sealing insert according to Claim 1, **characterized in that** the rectangular cross-sectional shape is a square.

3. Sealing insert according to one of the preceding claims, **characterized in that** the longitudinally running corners of the sealing insert (DE) are rounded off.

4. Sealing insert according to one of the preceding claims, **characterized in that** the hollow chamber (HK) and/or the longitudinal channels (LK) have circular cross sections.

5. Sealing insert according to one of Claims 1 to 3, **characterized in that** the hollow chamber (HK) and/or the longitudinal channels (LK) have oval cross sections, the long axes of the ovals running in the direction of the acting closing force (K).

6. Sealing insert according to one of the preceding claims, **characterized in that** the cross section of the hollow chamber (HK) is larger than in each case a cross section of a longitudinal channel (LK).

7. Sealing insert according to one of the preceding claims, **characterized in that** a plurality of rib-like protuberances (RA), preferably in each case two, are arranged in the lateral outer walls of the sealing insert (DE), preferably in two opposite outer walls, and **in that** depressions (ES) are formed between the rib-like protuberances (RA), with preferably a corrugated cross section being formed.

8. Sealing insert according to one of the preceding claims, **characterized in that** the elastic material is rubber.

9. Sealing insert according to one of Claims 1 to 7, **characterized in that** the elastic material is silicone.

10. Sealing insert according to one of the preceding claims, **characterized in that** the elastic material is present in foamed form.

11. Sealing insert according to one of the preceding claims, **characterized in that** the sealing insert (DE) is in the form of a continuous ring.

12. Sealing insert according to one of the preceding claims, **characterized in that** the hollow chamber (HK) and/or the longitudinal channels (LK) each have a hole or a compensation opening (AO) towards the outside.

13. Sealing insert according to one of the preceding claims, **characterized in that** it is arranged in a peripheral sealing groove (DN) of a sealing body (DK) for a cable sleeve (KM), and **in that** it can be pressed radially against the surrounding inner wall of the cable sleeve (KM) by means of the reduction of the sealing groove volume owing to the effect of an axial closing force.

## Revendications

1. Joint d'étanchéité de section transversale de forme rectangulaire en une matière plastique élastique pour assurer l'étanchéité entre un corps d'étanchéité et un corps de manchon de câble, dans lequel au moins une protubérance en forme de nervure (RA) est formée entre deux zones de coin (EB) de la section transversale de forme rectangulaire le long de la paroi extérieure du joint d'étanchéité (DE) et une chambre creuse (HK) est formée en direction longitudinale au centre du joint d'étanchéité (DE), **caractérisé en ce que** des canaux longitudinaux (LK) sont disposés dans chaque zone de coin (EB) du joint d'étanchéité (DE), orientés parallèlement à la chambre creuse (HK).

2. Joint d'étanchéité selon la revendication 1, **caractérisé en ce que** la section transversale de forme rectangulaire est un carré.

3. Joint d'étanchéité selon l'une quelconque des revendications précédentes, **caractérisé en ce que** les coins longitudinaux du joint d'étanchéité (DE) sont arrondis.

4. Joint d'étanchéité selon l'une quelconque des revendications précédentes, **caractérisé en ce que** la chambre creuse (HK) et/ou les canaux longitudinaux (LK) présentent des sections transversales circulaires.

5. Joint d'étanchéité selon l'une quelconque des revendications 1 à 3, **caractérisé en ce que** la chambre creuse (HK) et/ou les canaux longitudinaux (LK) présentent des sections transversales ovales, dans lequel les axes longs des ovales sont orientés dans la direction de la force de fermeture appliquée (K).

6. Joint d'étanchéité selon l'une quelconque des revendications précédentes, **caractérisé en ce que** la section transversale de la chambre creuse (HK) est plus grande que chaque section transversale d'un canal longitudinal (LK).

7. Joint d'étanchéité selon l'une quelconque des revendications précédentes, **caractérisé en ce que** plusieurs protubérances en forme de nervures (RA), de préférence chaque fois deux, sont disposées dans les parois extérieures latérales du joint d'étanchéité (DE), de préférence dans deux parois extérieures opposées, et **en ce que** des dépressions (ES) sont formées entre les protubérances en forme de nervures (RA), formant ainsi de préférence une section transversale ondulée.

8. Joint d'étanchéité selon l'une quelconque des revendications précédentes, **caractérisé en ce que** la matière élastique est le caoutchouc.

9. Joint d'étanchéité selon l'une quelconque des revendications 1 à 7, **caractérisé en ce que** la matière élastique est le silicone.

10. Joint d'étanchéité selon l'une quelconque des revendications précédentes, **caractérisé en ce que** la matière élastique se trouve sous forme de mousse.

11. Joint d'étanchéité selon l'une quelconque des revendications précédentes, **caractérisé en ce que** le joint d'étanchéité (DE) est constitué par un anneau sans fin.

12. Joint d'étanchéité selon l'une quelconque des revendications précédentes, **caractérisé en ce que** la chambre creuse (HK) et/ou les canaux longitudinaux (LK) présentent chaque fois un trou ou un orifice d'équilibrage (AO) vers l'extérieur.

13. Joint d'étanchéité selon l'une quelconque des revendications précédentes, **caractérisé en ce qu'**il est disposé dans une rainure d'étanchéité périphérique (DN) d'un corps d'étanchéité (DK) pour un manchon de câble (KM) et **en ce qu'**il peut être pressé radialement contre la paroi intérieure périphérique du manchon de câble (KM) par diminution du volume utile du joint sous l'action d'une force de fermeture axiale.
